# EUROPÄISCHE PATENTANMELDUNG

(11) **EP 2 720 095 A1**
(43) Veröffentlichungstag der Anmeldung: **16.04.2014**
(21) Anmeldenummer: 13004388.8
(22) Anmeldetag: 09.09.2013
(51) Int. Cl.: G05B 13/02, G05B 11/14, G05B 11/36

(54) **Regelungssystem**

(30) Priorität: 09.10.2012 DE 102012019736
(71) Anmelder: Severin Elektrogeräte GmbH, 59846 Sundern (DE)
(72) Erfinder: Schwiertz, Robert, 59457 Werl (DE)
(74) Vertreter: Ostriga Sonnet Wirths & Vorwerk

(57) **Zusammenfassung**

Dargestellt und beschrieben ist ein Regelungssystem mit einer elektronischen Steuer- und Regelungseinrichtung zur Ansteuerung eines Stell- oder Korrekturmittels.

Aufgabe der Erfindung ist es, ein neues Regelungssystem und ein neues Verfahren bereitzustellen, das eine Verbesserung der Regelungsgeschwindigkeit und Regelungsgenauigkeit bei möglichst geringem finanziellem Aufwand ermöglicht.

Die Lösung dieser Aufgabe wird durch ein Regelungssystem gemäß dem Anspruch 1 und ein Verfahren zur Regelung mindestens einer physikalischen Eingangsgröße, insbesondere der Temperatur bei der Heißwasserzubereitung in einer elektrischen Vorrichtung gemäß dem Anspruch 10 erreicht.

## Beschreibung

Die vorliegende Erfindung betrifft ein Regelungssystem mit einer elektronischen Steuer- und Regelungseinrichtung zur Ansteuerung eines Stell- oder Korrekturmittels, insbesondere einer Pumpe und/oder eines Heizkörpers einer Getränkezubereitungsmaschine, über welches mindestens eine physikalische Eingangsgröße ansteuerbar ist, wobei die elektronische Steuer- und Regelungseinrichtung einen elektronischen Speicher umfasst, in welchem ein analytisch oder experimentell erstellter Datensatz als Vergleichsmodelldatensatz, insbesondere Parameter oder Matrixregelung oder mindestens eine Prozesskurve hinterlegt ist und aus der Gesamtheit der Daten durch das Regelungssystem eine Änderung der physikalischen Eingangsgröße bestimmbar ist, sowie ein Verfahren zur Regelung mindestens einer physikalischen Eingangsgröße, insbesondere der Temperatur bei der Heißwasserzubereitung in einer elektrischen Vorrichtung, insbesondere einer Getränkezubereitungsmaschine mit einem entsprechenden Regelungssystem.

Derartige Vorrichtungen bzw. Verfahren sind auf dem Gebiet zur Regelung thermodynamischer Prozesse oder auch chemischer Prozesse wie beispielsweise zur Temperaturregelung von Flüssigkeiten bekannt.

Bei den thermodynamischen Prozessen zur Erwärmung von Flüssigkeiten gibt es im Wesentlichen zwei Grundkonzepte. Ein erstes Grundkonzept sieht vor, eine bestimmte Menge an Flüssigkeit ohne kontinuierlichen Durchfluss in einem Behälter wie beispielsweise einem Boiler zu erwärmen. Die Dauer des Aufwärmprozesses der Flüssigkeit hängt im Wesentlichen vom Wärmeleitwert einer zwischen der Flüssigkeit und dem Behälter gebildeten Grenzschicht ab. Um die Flüssigkeit in dem Behälter möglichst schnell aufzuwärmen, müssen sowohl die Auswahl des Werkstoffs des Wärmebehälters als auch die durch den Wärmebehälter zur Verfügung stehende bzw. definierte elektrische Leistung berücksichtigt werden. Dazu wird im Stand der Technik ein ausgewähltes Gesamtkonzept erstellt, bei dem sowohl die Abmaße und das Gewicht des Flüssigkeitsbehälters als auch die Art der Ansteuerung der elektrischen Leistung und die Erfassung der Temperatur an der Grenzschicht zwischen Flüssigkeit und Wärmebehälter einfließen.

Ein wesentlicher Nachteil an dieser Konzeption ist in der Energieeffizienz zu sehen, da dieses vorsieht, das erwärmte Medium ständig auf einem definierten Temperaturniveau zu halten, um nach einmaliger Aufwärmzeit bei erneuter Nutzung des Gerätes und somit des Wassers nicht wieder die komplette Aufwärmzeit in Anspruch nehmen zu müssen. Je größer die Masse des zu erwärmenden Mediums ist, desto länger dauert diese Aufwärmphase, weshalb ein Warmhalten des Mediums nach Erreichen des gewünschten Temperaturniveaus in solchen Fällen bevorzugt wird.

Der damit einhergehende Nachteil einer vergleichbar schlechteren Energieeffizienz fällt besonders bei den sogenannten "Power on Demand"-Anforderungen ins Gewicht, bei denen Energie nur in größeren Zeitabständen bei tatsächlich gewollter Anwendung seitens des Nutzers erfolgt. Beispielsweise kann es bei dem Betrieb einer Getränkezubereitungsmaschine wie einer Kaffeemaschine durchaus möglich sein, dass diese nach erstmaliger Kaffeezubereitung erst mehrere Stunden später erneut Wasser mit einer zum Brühen geeigneten Temperatur benötigt wird, was ganz klar gegen ein kontinuierliches Erwärmen der Flüssigkeit in dem Wassertank einer solchen Kaffeemaschine spricht. Hierbei kann die Energieeffizienz deutlich gesteigert werden, wenn ein Erwärmen der Flüssigkeit bei Bedarf in nur geringer Menge erfolgt.

Um einen solchen Betrieb zu ermöglichen, ist im Stand der Technik ein zweites Konzept bekannt, in welchem die Flüssigkeit mittels Durchlauferhitzer unter einem vorgegebenen gleichmäßigen Durchfluss erwärmt wird. Der Durchlauferhitzer wird von einer Flüssigkeit mit einem definierten gleichmäßigen Durchfluss durchströmt. Jedoch liegt hier die Schwierigkeit zusätzlich zu der Wärmeleitfähigkeit, Abstrahlung und elektrischer Leistung des Durchlauferhitzers in der Komplexität der Kontrolle dieses dynamischen Prozesses. Dies erfordert eine äußerst komplexe und damit kostenintensive Messtechnik, die es ermöglicht, auf die dynamischen, teilweise auch wechselnden Verhältnisse beispielsweise durch wechselnde Getränkewahl innerhalb des Durchlauferhitzers flexibel reagieren zu können.

Es ist daher das Bestreben, die Energieeffizienz bei möglichst stabilen Prozessabläufen mit hohen Qualitätsmerkmalen zu erreichen. Dazu sind im Stand der Technik verschiedenartige Regelungskonzepte bekannt.

Eine erste Möglichkeit der im Stand der Technik bekannten Regelungen ist die so genannte Zwei- oder Mehrpunktregelung von Temperatur und/oder Durchflussrate. Bei ihr wird prinzipiell bei zwei oder mehreren Messpunkten geregelt. Der Vorteil dieser Regelung liegt in der Regelungsgeschwindigkeit. Diese kann jedoch den Nachteil nicht wettmachen, dass sehr große Ungenauigkeiten mit dieser Regelungsart einhergehen. Daher ist diese Variante der Regelung lediglich bei Systemen anwendbar, die einen sehr großen Toleranzbereich ihrer physikalischen Größen beinhaltet. Sind die Anforderungen an die Regelgenauigkeit jedoch höher, so kann durch diese Methode kein zufrieden stellendes Ergebnis erzielt werden.

Die im Stand der Technik bekannteste und beliebteste Art der Regelung ist die über Analog-Regler. Sie haben den großen Vorteil, dass sie auch bei sehr komplexen Aufbauten durch geschickte Wahl des Analogreglers recht genau steuerbar sind. Gut dimensionierte Analog-Regler können nahezu sämtliche Stabilitätskriterien wie z.B. die nach Ziegler/Nichols oder Chien/Hrones/Reswig erfüllen.

Die Analog-Regler sind daher oft das Regelungssystem der Wahl, wenn die Regelstrecke im Vorfeld genau ermittelt werden und die Regelung bei hoher Genauigkeit auf einen Sollwert schnell erfolgen kann. Nachteilig an der Analog-Regelung ist jedoch häufig die Messerfassung, die bei einem solchen Regelungssystem durch eine sogenannte Rückkopplung erfolgt, so dass ein deterministisches Verhalten der Regelung sehr stark von der Geschwindigkeit der Messerfassung abhängt. Deterministisches Verhalten im Sinne der Erfindung bedeutet eine Quantisierung der Messpunkte innerhalb einer bestimmten Verarbeitungszeit. Nach den oben genannten Stabilitätskriterien ist die Dynamik des Regelungssystems auf einen Sollwert nur so schnell, wie es die Regelstrecke und die Messerfassung zulassen.

Wird dieses System zudem noch mit einem Mikrocontroller per Software umgesetzt, nehmen die Kommunikation und die digitale Rechenleistung auf die Dynamik des Regelungssystems Einfluss. Jeder zusätzliche Rechenschritt kann sich als Totzeitglied im Regelungssystem niederschlagen. Daher muss die Prozessdauer eines vollständigen Prozesszyklus der Geschwindigkeit des Regelungssystems angepasst werden. Anderenfalls ist es nicht möglich, die Regelung in einem stark verkürzten Zyklus des Prozesses stabil zu regeln, wobei hierbei die Gefahr der Prozessinstabilität von einem zum nächsten Prozessschritt steigt.

Eine weitere Regelungsart stellt die sogenannte Fuzzy-Regelung dar, welche auf einer Erstellung von Fuzzy-Mengen bzw. Fuzzy-Sets beruht. Hierbei wird ein Gleichungssystem bzw. eine Gleichungsmatrix nach der statistischen Häufigkeit eines Messwertes erstellt. Mit diesem Gleichungssystem bzw. der Gleichungsmatrix wird eine Wahrheitstabelle generiert. Anhand dieser wird wiederum eine Steuergröße festgelegt, mit dem Ziel, dass der Istwert sich dem Sollwert möglichst ständig annähert. Die Fuzzy-Regelung ist in Bezug auf digitale Regelungen sowohl eine der modernsten und komplexesten Methoden. Zugleich wird sie in allen technischen Bereichen verwendet, weil mit ihr jedes Regelungssystem individuell gestaltet werden kann. Jedoch bleibt nachteilig an der Fuzzy-Regelung deren Ungenauigkeit bzw. Unschärfe der statistischen Werteverteilung und der damit verbundenen Toleranzgrößen, die im Vorfeld exakt bestimmt werden müssen, um eine möglichst genaue Toleranzabweichung vorherzusagen und so die Prozessstabilität gewährleisten zu können.

Eine weitere Variante eines Regelungssystems beruht auf einer Steuerung mit einer Mindestanforderung an Regelung nach im Vorfeld experimentell oder analytisch ermittelten und ausgewerteten Prozesskurven. Diese Methode ist vor allem dann nützlich, wenn die Fuzzy-Regelung zu kompliziert oder zu ungenau ist. Bei dieser Regelung wird durch experimentelle oder analytische Untersuchungen eine sogenannte ideale Prozesskurve generiert und im Anschluss die Regelung so gewählt, dass sie sich entlang der idealen Prozesskurve orientiert. Der Nachteil an solchen Prozesskurven besteht zum einen in der sehr aufwendigen Erstellung letzter. Je genauer ein bestimmtes Modell beschrieben werden muss, desto größer ist der Aufwand, eine solche ideale Prozesskurve zu ermitteln. Zudem ist es zwangsläufig notwendig, bei der Erstellung der idealen Prozesskurve eine experimentelle Aussage über die Streuung aller möglichen Toleranzen der in der Prozesskurve berücksichtigten Parameter zu machen. Eine solche exakte Voraussage in einem System sowie deren Umsetzung ist extrem schwierig.

Die oben genannten Regelungsmethoden haben gemeinsam den Nachteil, dass die Geschwindigkeit der Messung zur Ermittlung der Temperatur, die auch Sprungantwortzeit des Temperatursensors bei Systemen zur Flüssigkeitserwärmung genannt wird, ein wesentlicher Bestandteil eines jeden Regelungssystems bildet und diese nur über entsprechend schnelle Temperatursensoren verringert werden können. Diese schnellen Temperatursensoren sind jedoch aufgrund der damit einhergehenden hohen Kosten bei steigendem Preisdruck nicht mehr rentabel.

Zusammengefasst lässt sich über alle vier erläuterten Regelungsmethoden die Aussage treffen, dass entweder die Regelungsmethode exakt, aber mit sehr hohem Aufwand an Messerfassung und Messwertverarbeitung notwendig sind oder sie mathematisch oder statistisch modellbasierend erstellt werden müssen. Dies geht mit erheblichen Kosten einher.

Es ist daher Aufgabe der vorliegenden Erfindung, ein neues Regelungssystem und ein neues Verfahren bereitzustellen, das eine Verbesserung der Regelungsgeschwindigkeit und Regelungsgenauigkeit bei möglichst geringem finanziellem Aufwand ermöglicht.

Diese Aufgabe wird erfindungsgemäß durch ein Regelungssystem gemäß dem Anspruch 1 und ein Verfahren zur Regelung mindestens einer physikalischen Eingangsgröße, insbesondere der Temperatur bei der Heißwasserzubereitung in einer elektrischen Vorrichtung gemäß dem Anspruch 10 gelöst.

Das Regelungssystem nach Anspruch 1 schlägt erfindungsgemäß vor, dass der Vergleichsdatensatz eine Eingangsgrößen-Systemtakt-/Flächenmatrix umfasst, und die Regelungseinrichtung mehrere verschiedenartige Analog-Regler aufweist, um in Abhängigkeit der sich aus Systemtakt und Eingangsgröße ergebenden Position innerhalb der Flächenmatrix den Regler und/oder die Art der Ansteuerung des Reglers zu wählen, dessen Kennlinie einer individuellen, zeitlich optimierten Anpassung der Regelung eines in der Matrix festgelegten Sollwertbereichs der zu regelnden Stellgröße entspricht.

Durch Anlehnung der Kennlinien von verschiedenartigen analogen Reglern an den Datensatz des Vergleichsmodells wird eine ganz neue Möglichkeit der Regelung physikalischer Eingangsgrößen geschaffen, welche folgende Schritte umfasst:
1. Ermitteln der Eingangsgröße;
2. Vergleich von Ist-Soll-Werten durch Einordnen der Eingangsgröße in eine in dem Speicher abgelegten Eingangsgrößen-Systemtakt-Flächenmatrix;
3. Auswahl eines Reglertyps auf Basis der getroffenen Einordnung in der Matrix;
4. Ausgabe einer Steuergröße und eines Reglertyps auf Basis der getroffenen Einordnung zur Korrektur der Eingangsgröße;
5. Wiederholen der Schritte 1 bis 4.

Der wesentliche Unterschied zu dem bisher bekannten Regelungsverfahren besteht darin, dass erfindungsgemäß eine ständige Bewertung des ermittelten Ist-Wertes und einer damit einhergehenden Auswahl des Reglertyps sowie die Verwendung bzw. Veränderung ihrer Parameter und ferner eine Begrenzung des Wertebereichs der Analog-Regelung zur Erstellung und Ausgabe einer Sollgröße im vorgegebenen Systemtakt durchgeführt wird.

Somit erfolgt die Festlegung der Steuergröße über eine Kausalität, indem abgefragt wird, in welchem Fenster der Eingangsgrößen-Systemtakt-Flächenmatrix sich der sich aus Eingangsgröße und Systemtakt ergebenden Position oder Istwert befindet.

Das neue Regelungssystem bzw. das neue Regelungsverfahren beruht mit anderen Worten im Wesentlichen darauf, dass das eigentliche Regelungssystem in einer Eingangsgrößen-Systemtakt-/Flächenmatrix, im Fall eines Getränkezubereitungsgerätes in einer Temperatur-Zeitflächen-Matrix während eines gesamten Prozesszyklus entsprechend dem Systemtakt immer wieder neu bewertet wird.

Es bietet sich dazu an, dass der Datensatz eine Vielzahl von Eingangsgrößensystemtakt-Flächenfenstern zur Bildung der Matrix aufweist, wobei die Auswahl und/oder die Ansteuerung der verschiedenartigen Analog-Regler in Abhängigkeit davon erfolgt, in welchem Eingangsgrößen-Systemtakt-Flächenfenster der Matrix sich die über das System ermittelte Eingangsgröße befindet, wobei bei jedem weiteren Systemtakt erneut eine Auswahl und Bewertung des Analogreglers und dessen Betriebsart erfolgt.

Eine besonders stabile Regelung ergibt sich, wenn der Datensatz eine Vielzahl von Eingangsgrößen-Systemtakt-Flächenfenstern zur Bildung der Matrix aufweist, wobei die Auswahl und/oder Ansteuerung der verschiedenartigen Analog-Regler in Abhängigkeit davon erfolgt, in welchem Eingangsgrößen-Systemtakt-Flächenfenster der Matrix sich die über das System ermittelte Eingangsgröße befindet, wobei bei jedem Systemtakt eine Neubewertung des Analogrechners folgt.

Eine solche Neubewertung kann mittels "if-else if-else"-Anweisungen umgesetzt sein. Natürlich ist es auch möglich, eine Neubewertung mit "switch-case"-Anweisungen zu realisieren.

Ferner kann es sich als vorteilhaft erweisen, wenn die aus den Ausgangsgrößen der Analog-Regler und die resultierende Steuergrößen innerhalb der Eingangsgrößen-Systemtakt-Flächenmatrix auch in ihren Minima und Maxima begrenzt sind.

Eine besonders zuverlässige Möglichkeit, die Eingangsgröße zu bestimmen, ist dann gegeben, wenn die Bestimmung der Eingangsgröße über mindestens einen Mikrocontroller bzw. einen Mikroprozessor und/oder mindestens einen insbesondere frei programmierbaren digitalen IC und/oder mindestens ein Prozessleitsystem (DSC) und/oder mindestens eine speicherprogrammierbare Steuerung (SPS) aufweist. Dabei kann es ausreichen, nur eines der oben genannten Bauteile zur Bestimmung der Eingangsgröße zu verwenden. Es kann jedoch zweckmäßig sein, mehrere der Bauteile entweder gleichartig oder auch in Kombination verschiedenartig zu wählen.

Dabei kann die Regelungseinrichtung beispielsweise einen PI-Regler und/oder einen PD-Regler und/oder einen PID-Regler umfassen.

Für die Temperaturregelung eines Durchlauferhitzers beispielsweise bei einer Getränkezubereitungsmaschine haben sich zwei Analog-Regler als besonders günstig erwiesen, so dass in einem Ausführungsbeispiel der vorliegenden Erfindung die Regeleinrichtung zur Temperaturregelung mindestens ein Analog-Regler als PD-Regler und als weiterer Regler mindestens ein PID-Regler vorgeschlagen wird.

Das oben beschriebene Regelungssystem eignet sich besonders zum Einsatz in Getränkezubereitungsmaschinen, aber auch beispielsweise in einem Kraftfahrzeug zur Regelung der gewünschten Geschwindigkeit des Fahrzeuges mittels eines Tempomat.

Das erfindungsgemäße Verfahren zur Regelung mindestens einer physikalischen Eingangsgröße wie beispielsweise der Temperatur bei der Heißwasserzubereitung in einer elektrischen Vorrichtung wie einer Getränkezubereitungsmaschine oder aber auch der Geschwindigkeit eines Kraftfahrzeuges, die zur Regelung der Eingangsgröße eine elektronische Steuerungs- und Regelungseinrichtung zur Ansteuerung eines Stell- oder Korrekturmittels aufweist und einen elektronischen Speicher umfasst, in welchem ein Datensatz als Vergleichsmodell abgespeichert ist, der analytisch oder experimentell erstellt wurde, wobei aus der Gesamtheit der Daten durch die Regelelektronik eine Änderung der physikalischen Eingangsgröße anhand eines Modells bestimmt wird, ist erfindungsgemäß **dadurch gekennzeichnet, dass** die Steuer- und Regelungseinrichtung mehrere verschiedenartige analoge Regler aufweist, deren Kennlinie an dem Datensatz des Vergleichsmodells angelehnt werden, wobei das Verfahren folgende Schritte umfasst:
1. Ermitteln der Eingangsgröße;
2. Vergleich von Ist-Soll-Werten durch Einordnen der Eingangsgröße in eine in dem Speicher abgelegten Eingangsgrößen-Systemtakt-Flächenmatrix;
3. Auswahl eines Reglertyps auf Basis der getroffenen Einordnung in der Matrix;
4. Ausgabe einer Steuergröße und eines Reglertyps auf Basis der getroffenen Einordnung zur Korrektur der Eingangsgröße;
5. Wiederholen der Schritte 1 bis 4.

Bei dem oben beschriebenen Verfahren bietet es sich an, die Ermittlung und Überprüfung der Eingangsgröße kontinuierlich durchzuführen, so dass in Abhängigkeit von dem Systemtakt eine ständige Neubewertung über die Wahl eines der verschiedenartigen Analogregler und dessen Betriebsart in der Steuer- und Regelungseinrichtung zur Verwendung der Parameter und zur Begrenzung des Wertebereichs der Analog-Regler durchgeführt wird.

Dabei sollte der Systemtakt kleiner gewählt sein als die im Stand der Technik notwendige Einschwingzeit eines herkömmlichen in Alleinstellung in der Steuerungs- und Regelungseinrichtung vorgesehenen Analog-Reglers.

Für den Fall, dass das oben beschriebene Verfahren zur Temperaturreglung, insbesondere zur Heißwasserzubereitung in einer Getränkezubereitungsmaschine eingesetzt wird, umfasst das Verfahren folgende Schritte:
1. Abfrage der in einer Temperatur-Zeit-Flächenmatrix definierten Solltemperatur, wobei bei erreichter Solltemperatur die Stellgröße zur Ansteuerung der elektrischen Energie beibehalten wird, oder wenn der Prozess zyklisch zur Erwärmung von Flüssigkeiten abgeschlossen ist, zum näch¬sten Prozessschritt übergegangen wird;
2. Bei Nichterreichen der Solltemperatur eine Auswahl eines der Analog-Regler in Abhängigkeit der Ortung der Temperatur innerhalb der Temperatur-Zeit-Flächenmatrix erfolgt, wobei die Matrix aus mindestens einem Zeitabschnitt und mindestens einem Temperaturschellenwert besteht;
3. Abfrage, wie der gewählte Analog-Regler in dem ermittelten Temperatur-Zeitfenster der Matrix anzusteuern ist,
4. Ausgabe der Stellgröße und des Reglertyps zur Korrektur der Solltemperatur,
5. Wiederholen der Schritte 1 bis 4,
wobei die Abfrage bei Unterschreiten oder Überschreiten eines Temperaturschwellwerts beliebig oft in Anhängigkeit von mehreren Temperaturschwellwerten solange durchgeführt wird, bis ein Temperaturbereich erreicht ist, innerhalb dessen der Analog-Regler ohne Eingrenzung des Regelbereichs angesteuert werden kann.

Mit anderen Worten werden die Verfahrensschritte 1 bis 4 zur Abfrage, ob ein Unterschreiten oder Überschreiten eines in den Datensätzen festgelegten Temperaturschwellwertes vorliegt, beliebig oft in Abhängigkeit von mehreren Temperaturschwellwerten so lange durchlaufen, bis sich die Solltemperatur in einem ebenfalls in der Datenbank abgelegten Toleranzbereich einstellt. Der Toleranzbereich, innerhalb welchem die Solltemperatur geregelt werden werden soll, muss nicht unbedingt in einer Datenbank abgelegt sein, sondern kann beispielsweise auch über entsprechende Software direkt ohne Ablage in einer Datenbank direkt dem Regelsystem zur Verfügung gestellt werden.

Hinsichtlich weiterer Vorteile der Erfindung wird auf die Unteransprüche sowie die nachfolgende Beschreibung der Figuren verwiesen.

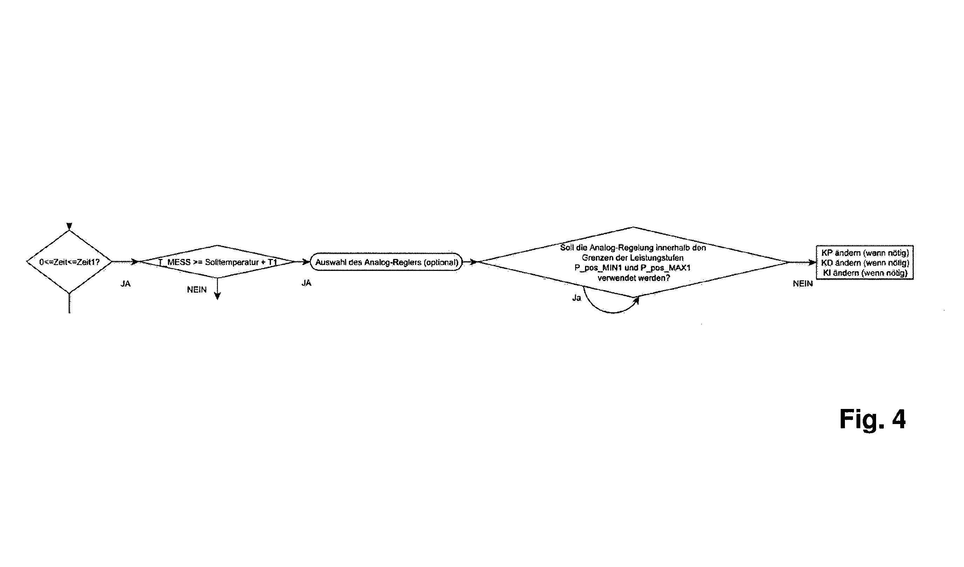

Darin zeigen:
Figur 1 das Schaltbild eines PD-Reglers sowie eines PID-Reglers;
Figur 2 eine erfindungsgemäße Temperatur-Zeit-Flächenmatrix mit entsprechenden Flächenfenstern;
Figur 3 ein Flussdiagramm der Abfragen des erfindungsgemäßen Verfahrens;
Figur 4 einen Ausschnitt der Matrixstruktur zur Erläuterung des Verfahrens; und
Figuren 5a
   bis 5c ein erweitertes Beispiel der Matrix gemäß der Figur 4.

Im Folgenden wird das erfindungsgemäße Regelungssystem sowie das damit verknüpfte erfindungsgemäße Verfahren am Beispiel der Temperaturregelung näher erläutert.

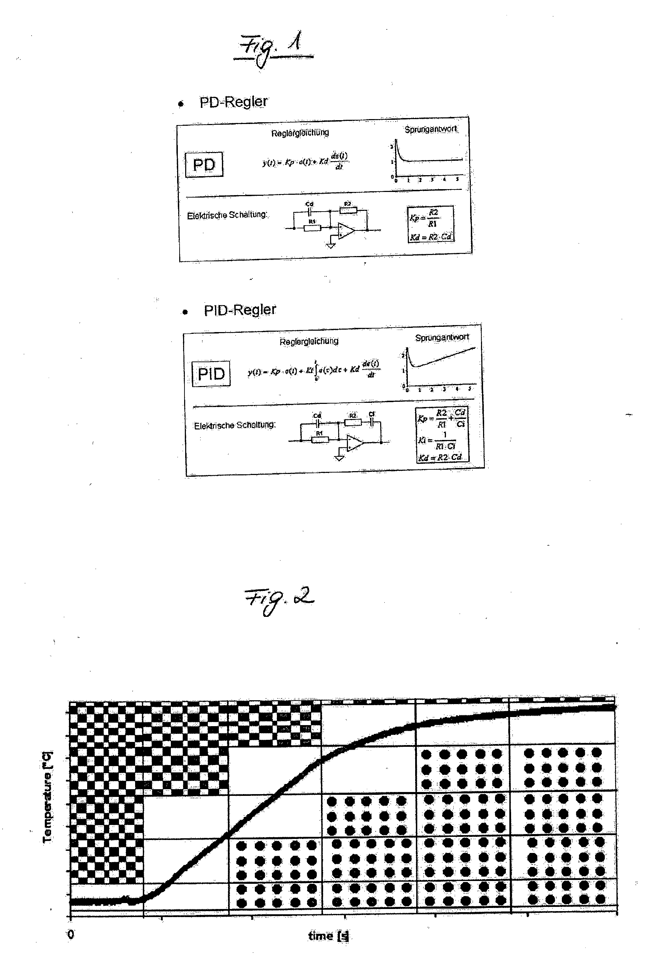

Hierzu zeigt die Figur 1 ein Schaltbild eines PD-Reglers sowie eines PID-Reglers, deren Kombination in dem erfindungsgemäßen Regelungssystem mit einer elektronischen Steuer- und Regelungseinrichtung zur Ansteuerung eines Temperaturstell- oder Korrekturmittels wie beispielsweise einer Pumpe und/oder eines Heizkörpers eine Getränkezubereitungsmaschine als besonders effektiv erwiesen haben.

Die elektronische Steuer- und Regelungseinrichtung weist dabei einen elektronischen Speicher in der Form eines Mikrocontrollers auf, in welchem ein analytisch oder experimentell erstellter Datensatz als Vergleichsmodelldatensatz hier in Form von Parametern der Matrixregelung hinterlegt sind. Aus der Gesamtheit der Daten ist durch das Regelungssystem eine Änderung der physikalischen Eingangsgröße anhand des Vergleichsmodelldatensatzes bestimmbar.

Der Vergleichsdatensatz weist Parameter auf, die vorliegend in der Form einer Eingangsgrößen-Systemtakt-Flächenmatrix aufbereitet sind. In der Regelungseinrichtung sind vorliegend ein PD-Regler und ein PID-Reglers zur Temperatursteuerung vorgesehen, da deren Kennlinien eines wie in Figur 2 gezeigten idealen Temperaturprofils am nächsten kommt.

Die Parameter KPPD, KDPD, KPPID, KDPD und KIPID sind analytisch oder experimentell ermittelt worden. Die Dynamik und Stabilität des Systems sind nach ihrem Einschwingverhalten durch die Regelstreckenverzögerung per Messwerterfassung und Werteverarbeitung vorgegeben. Neu beim dem Einsatz der kombinierten Analog-Regler ist, dass ständig eine Auswahl zwischen den beiden Reglern innerhalb einer Temperatur-Zeitflächen-Matrix getroffen werden kann und dazu ständig eine Bewertung und gegebenenfalls ein Wechsel des Reglertyps oder aber eine Änderungen der Regelparameter der verschiedenen Analog-Regler in Abhängigkeit von der durch das Regelungssystem ermittelten physikalischen Größe, hier also der Temperatur in Abhängigkeit von der Prozesszeit und somit des Parameters innerhalb der Zeitflächenmatrix erfolgt. Die Ausgangsgröße des angewählten Analog-Reglers und die resultieren Steuergrößen werden dabei in ihrer Minima und Maxima begrenzt.

Der Ablauf des Verfahrens wird mit Hilfe des in der Figur 2 gezeigten optimalen Temperaturprofils deutlich. In der Figur 2 ist die Eingangsgrößen-Systemtakt-Flächenmatrix durch eine Temperatur-Zeit-Flächenmatrix wiedergegeben. Innerhalb dieser Matrix sind verschiedene Temperatur-Zeit-Flächenfenster festgelegt worden, von denen die dem idealen Temperaturprofil am nächsten liegenden Fenster bzw. die von dem idealen Temperaturverlauf geschnittenen Fenster als so genannte Toleranzfelder oder im vorliegenden Ausführungsbeispiel als Temperaturschwellwerte gewertet werden, wie durch die nicht schraffierten Kästen dargestellt.

Unterhalb des idealen Temperaturprofils befinden sich weitere gepunktet schraffierte Flächenfenster und oberhalb des idealen Temperaturprofils kreuzschraffierte Flächenfenster.

Die Bewertung der Analog-Reglers erfolgt nach dieser definierten Temperatur-Zeitflächen-Matrix. Die unschraffierten Temperatur-Zeitflächen stellen den Bereich dar, bei dem der für den Prozessablauf ideale Temperaturbereich definiert und erreicht ist. Eine Änderung der Regelungsart oder des Regelungstyps ist hier nicht notwendig, der Prozess läuft stabil.

Die schraffiert gekennzeichneten Temperatur-Zeitflächen-Fenster deuten hingegen Bereiche an, in denen eine Neubewertung der Analog-Regler erfolgen muss. Das bedeutet konkret, dass für den Fall, dass sich der Istwert in einem der schraffiert gekennzeichneten Temperatur-Zeitflächen befindet, eventuell eine Änderung über die Auswahl des Analog-Reglers oder über eine Veränderung der Regelparameter des jeweiligen Reglers oder über eine Begrenzung der Minima und der Maxima der Stellgrößen erfolgen muss, um möglichst schnell den Bereich der nicht schraffierten deklarierten Temperatur-Zeitflächen-Fenster wieder zu erreichen.

Die ständige Bewertung über die Wahl und die Betriebsart des jeweiligen Analog-Reglers bzw. dessen Verwendung bzw. Veränderung der jeweiligen Parameter und die Begrenzung des Wertebereichs und der Analog-Regelung sind dabei erfindungswesentlich. Die Beurteilung erfolgt über eine Kausalität, indem abgefragt wird, in welchem Temperaturzeitflächen-Fenster sich der ermittelte Istwert befindet.

Im vorliegenden Fall erfolgt die Bewertung individuell auf ein vorgegebenes Gesamtkonzept, welches aus einem Durchlauferhitzer, der Ansteuerungsart der elektrischen Leistung, einem Temperatursensor und einer Werteverarbeitung wie beispielsweise einem Mikrocontroller oder aber auch einem Prozessleitsystem (DSC) oder mindestens einer speicherprogrammierbaren Steuerung (SPS) erfolgt.

Der wesentliche Vorteil dieser Regelungsstruktur ist es, dass der Istwert der Temperatur innerhalb eines vorgegebenen Prozesszyklus erreicht werden kann, der weitaus kürzer ist als eine normalerweise notwendige Einschwingzeit eines üblichen Analog-Reglers wie im Stand der Technik bekannt. Der Prozesszyklus ist somit so zu takten, dass die Analog-Regler zu keinem Zeitpunkt instabil in ihrer Funktion werden.

Durch die Möglichkeit der Wahl des jeweiligen Reglers in Abhängigkeit der zu diesem Zeitpunkt herrschenden Temperaturverhältnisse (Istwert) durch Vergleich mit dem Sollwert führt zu einer deutlichen Prozessbeschleunigung und bewirkt somit eine weitaus höhere Energieeffizienz durch Verkürzung der Prozesszyklen. So ist eine verbesserte Regelungsgenauigkeit bei gleichzeitig gesteigerter Regelungsdynamik erreicht. Auf die Anforderung der Granulität der Temperaturmessung und die Eingrenzung der Toleranzgrößen in der Produktion erweisen sich verglichen mit dem Stand der Technik als geringer.

Das oben beschriebene Regelungskonzept lässt es zu, einen Standard-Durchlauferhitzer mit einem relativ guten aber dennoch günstigen Temperatursensor so zu kombinieren, dass sie einem Gesamtkonzept mit einem Durchlauferhitzer und einem wesentlich aufwendigeren Temperatursensor in keinster Weise nachstehen. Es ist sogar möglich, durch Einsatz des Regelungssystems bzw. Regelungsverfahrens in einem High-End-Produkt auch dessen bereits gute Zykluszeiten und -genauigkeiten weiter zu verbessern.

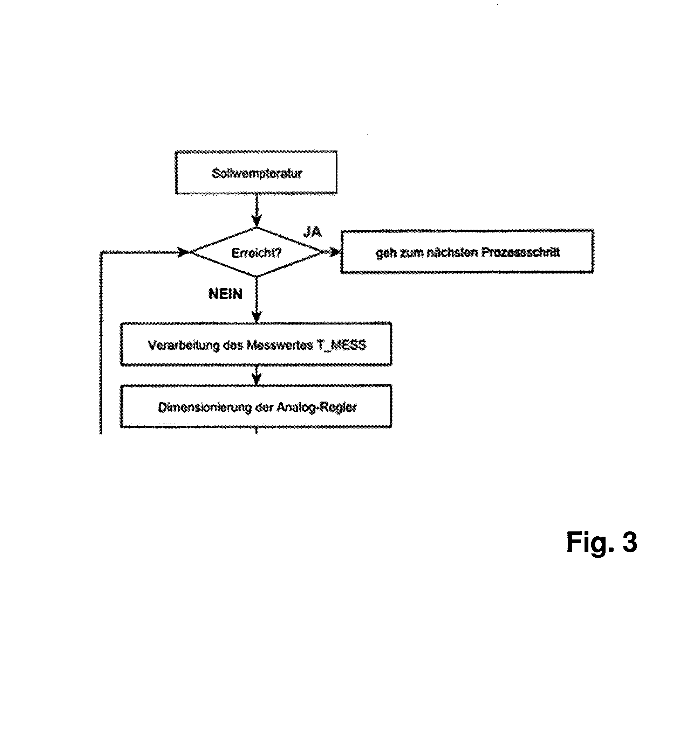

Die Figur 3 zeigt eine systematische Darstellung des erfindungsgemäßen Regelungsverfahrens. Zunächst erfolgt eine Abfrage-und Werteverarbeitung der Messwerte und Dimensionierung der Analog-Regler. Dies wird im Vorfeld bereits durchgeführt, um einen Datensatz als Vergleichsmodell auf analytische oder experimentelle Weise zu erstellen und so eine Eingangsgrößen-Systemtakt-Flächenmatrix zu erstellen.

Wird nun das System wie beispielsweise Getränkezubereitungsmaschinen gestartet, so wird zunächst die aktuelle Temperatur ermittelt und mit der Solltemperatur verglichen. Stimmen diese überein oder befindet sich die Abweichung innerhalb des Toleranzbereichs (siehe nicht schraffierte Fenster in Figur 2) so wird entweder die Stellgröße zur Ansteuerung der elektrischen Energie beibehalten oder wenn der Prozesszyklus zur Erwärmung von Flüssigkeiten diente und die Flüssigkeit die gewünschte Temperatur erreicht hat, nächste Prozessschritte eingeleitet.

Falls die Solltemperatur mit der ermittelten Temperatur nicht übereinstimmt oder bereits überschritten ist, werden erfindungsgemäß folgende Verfahrensschritte unternommen. Zunächst wird innerhalb der Temperatur-Zeitflächenfenster, die durch einen Zeitabschnitt und einen Temperaturschwellwert besteht, durch Zuordnung des Flächenmatrixfensters innerhalb der Temperatur-Zeitflächenmatrix der Reglertyp des Analog-Reglers, also vorliegend entweder der PD- oder der PID-Regler ausgewählt, der speziell in diesem Temperatur-Zeitflächenfenster zugeordnet ist. Entweder ist der Regelbereich des Reglers bzw. dessen elektrische Leistung P durch ein Minimum und ein Maximum der verfügbaren Energie eingegrenzt oder die Parameter der Analog-Regler werden verändert. Dabei erfolgt die Eingrenzung bereits während der Regelung.

Die Abfrage beim Unterschreiten oder Überschreiten eines Temperaturschwellwertes wird entsprechend des auf der X-Achse aufgetragenen Systemtaktes des in dem Ausführungsbeispiel verwendeten Mikrocontrollers immer wieder durchgeführt, bis ein bestimmter Temperaturbereich erreicht ist, innerhalb dessen der Analog-Regler ohne Eingrenzung des Regelbereichs eingesetzt werden kann. Die Temperaturschwellwerte sind so ausgewählt, dass möglichst schnell ein definierter Temperaturverlauf erreicht wird. Um dieses Temperaturniveau zu erreichen, wird während der Umsetzung von einem zum nächsten Temperaturniveau stets ein Analog-Regler verwendet. Die Methode kann so ausgeweitet werden, dass die Regelung detailliert und individuell gestaltet werden kann.

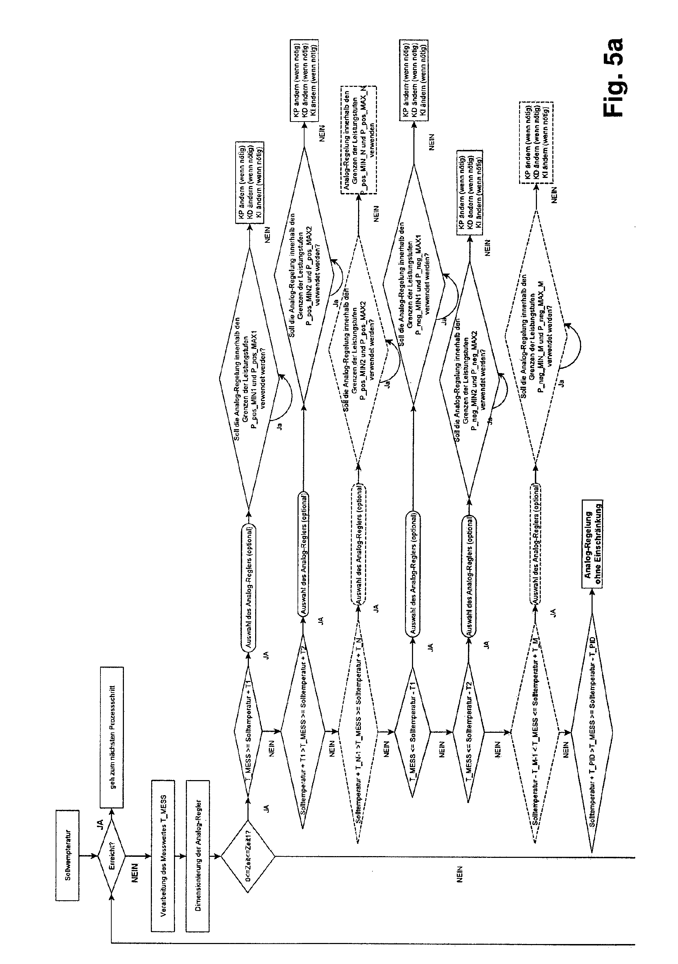

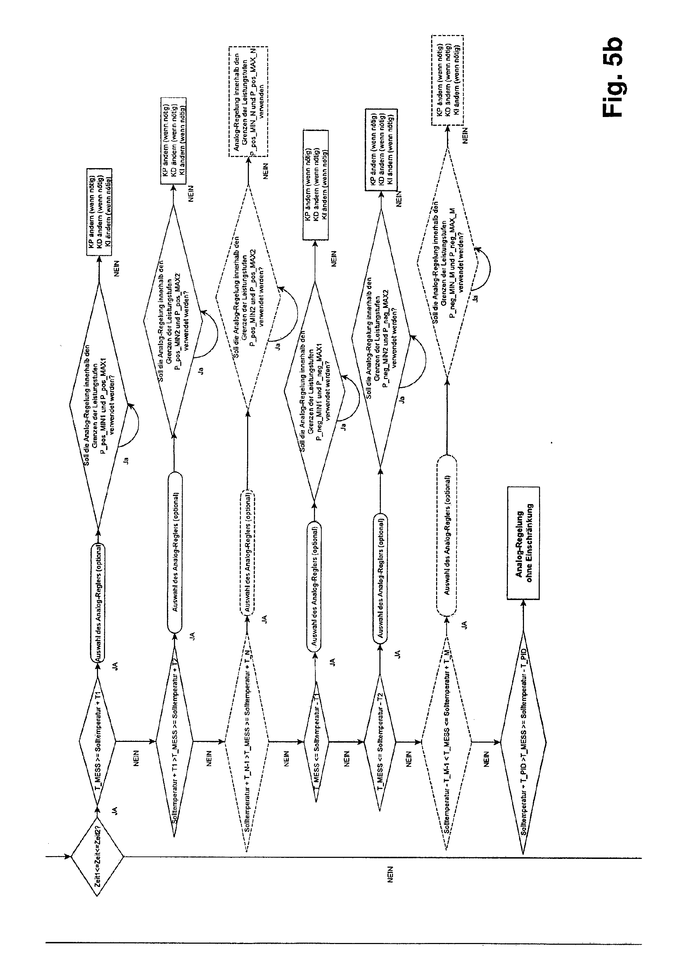

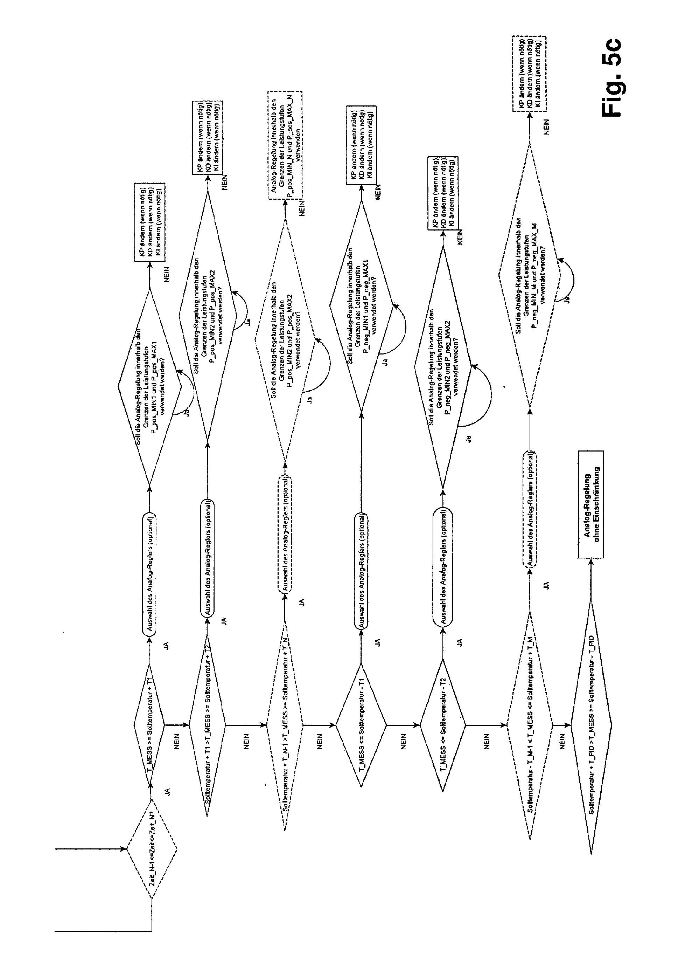

Die Figuren 4 und 5a bis c zeigen beispielhaft Auszüge einer solchen komplexen Struktur. Zunächst erfolgt eine Abfrage bezüglich der Zeit, wobei der Systemtakt die Zeitabstände und die Anzahl der verschiedenen Temperaturmessungen festlegt. In den Figuren 4 und 5 a bis c ist diese Abfrage durch links angeordnete Rauten symbolisiert. Ist der Systemtakt erreicht, so wird eine Messung der Temperatur gestartet, hier ebenfalls durch ein Rautensymbol dargestellt. Entspricht die gemessene Temperatur der Solltemperatur, erfolgt keine Korrektur der derzeitigen Verfahrensparameter. Ist jedoch die Messtemperatur beispielsweise derart größer als die Solltemperatur, dass der Messwert in dem Diagramm gemäß Figur 2 zu dem bestimmten Systemtakt innerhalb der quadratisch schraffierten Zeitfenster der Matrix liegt, so erfolgt eine Auswahl des Analog-Reglers (das langlochartige Symbol in Figuren 4 + 5a bi c) sowie im Anschluss die Art der Ansteuerung des Analog-Reglers wie beispielsweise, ob die Analogregelung innerhalb der Grenzen der Leistungsstufen Ppositiv minimum und Ppositiv maximum verwendet werden soll (wiederum durch ein Rautensymbol gekennzeichnet). Soll die Analogregelung entsprechend des Matrixfensters innerhalb dieser Grenzen geregelt werden, so wird eine entsprechende Ansteuerung veranlasst, ist dies nicht der Fall, so können verschiedene Befehle generiert werden, wie beispielsweise entweder das KP zu ändern, KD zu ändern oder aber auch KI zu ändern (siehe Rechtecksymbol).

Die Figuren 5a bis 5c zeigen einen noch größeren Ausschnitt einer entsprechenden Befehlsmatrix. Diese kann natürlich beliebig oft entsprechend mit dem vorgegebenen Systemtakt durchlaufen werden.

Mit anderen Worten erfolgt zu jedem Systemtakt eine Neubewertung des einzusetzenden Analog-Reglers, hier PD oder PID, sowie deren Betriebsart. Dazu ist jedem in dem in der Figur 2 gezeigten Flächenfenster ein Analog-Regler zugeordnet. Bei unveränderter Auswahl des Analog-Reglers oder ohne veränderte Parameter der Analog-Regler oder aber auch unveränderten Begrenzungen des Wertebereichs der Regelung kann jeweils das Beibehalten der Bewertung durch Auslassung dieser Möglichkeiten ausgedrückt werden. Es erfolgt also immer eine Auswahl des Analog-Reglers, eine eventuelle Änderung der Reglerparameter für den Fall, dass sich das Flächenfenster sehr weit von dem idealen Temperaturverlauf entfernt befindet sowie ein Eingrenzen des Wertebereichs von Systemtakt zu Systemtakt.

Mit dieser Regelungsstruktur geht der Vorteil einher, verschiedenartige Analog-Regler in ihrer Funktion für die jeweilige Situation einsetzen zu können, was zu einer deutlichen Reduktion der Zykluszeiten des Prozesses ohne Einbüßung bezüglich der Genauigkeit hinnehmen zu müssen.

## Patentansprüche

1. Regelungssystem mit einer elektronischen Steuer- und Regelungseinrichtung zur Ansteuerung eines Stell- oder Korrekturmittels, insbesondere einer Pumpe und/oder eines Heizkörpers einer Getränkezubereitungsmaschine, über welches mindestens eine physikalische Eingangsgröße ansteuerbar ist, wobei die elektronische Steuer- und Regelungseinrichtung einen elektronischen Speicher umfasst, in welchem ein analytisch oder experimentell erstellter Datensatz als Vergleichsmodelldatensatz, insbesondere Parameter oder Matrixregelung oder mindestens eine Prozesskurve hinterlegt ist und aus der Gesamtheit der Daten durch das Regelungssystem eine Änderung der physikalischen Eingangsgröße bestimmbar ist, **dadurch gekennzeichnet, dass** der Vergleichsdatensatz eine Eingangsgrößen-Systemtakt-/Flächenmatrix umfasst, und die Regelungseinrichtung mehrere verschiedenartige Analog-Regler aufweist, um in Abhängigkeit der sich aus Systemtakt und Eingangsgröße ergebenden Position innerhalb der Flächenmatrix den Regler und/oder die Art der Ansteuerung des Reglers zu wählen, dessen Kennlinie einer individuellen, zeitlich optimierten Anpassung der Regelung eines in der Matrix festgelegten Sollwertbereichs der zu regelnden Stellgröße entspricht.

2. Regelungssystem nach Anspruch 1, **dadurch gekennzeichnet, dass** der Datensatz eine Vielzahl von Eingangsgrößen-Systemtakt-Flächenfenstern zur Bildung der Matrix aufweist, wobei die Auswahl und/oder Ansteuerung der verschiedenartigen Analog-Regler in Abhängigkeit davon erfolgt, in welchem Eingangsgrößen-Systemtakt-Flächenfenster der Matrix sich die über das System ermittelte Eingangsgröße befindet, wobei bei jedem Systemtakt eine Neubewertung des Analogrechners folgt.

3. Regelungssystem nach Anspruch 1 oder 2, **dadurch gekennzeichnet, dass** Ausgangsgrößen der Analog-Regler und die resultierenden Steuergrößen innerhalb der Eingangsgrößen-Systemtakt-Flächenmatrix in ihren Minima und Maxima begrenzt sind.

4. Regelungssystem nach einem der Ansprüche 1 bis 3, **dadurch gekennzeichnet, dass** es zur Bestimmung der Eingangsgröße mindestens ein Mikrocontroller bzw. ein Mikroprozessor und/oder mindestens einen insbesondere frei programmierbaren digitalen IC und/oder mindestens ein Prozessleitsystem (DSC) und/oder mindestens eine speicherprogrammierbare Steuerung (SPS) aufweist.

5. Regelungssystem nach einem der vorhergehenden Ansprüche, **dadurch gekennzeichnet, dass** die Regeleinrichtung einen PI-Regler und/oder einen PD-Regler und/oder einen PID-Regler umfasst.

6. Regelungssystem nach einem der vorhergehenden Ansprüche, **dadurch gekennzeichnet, dass** zur Temperaturregelung einer der Analog-Regler ein PD-Regler und ein weiterer Regler ein PID-Regler ist.

7. Getränkezubereitungsmaschine mit einem Regelungssystem nach einem der vorhergehenden Ansprüche.

8. Tempomat mit einem Regelungssystem nach einem der vorhergehenden Ansprüche.

9. Verfahren zur Regelung mindestens einer physikalischen Eingangsgröße, insbesondere der Temperatur bei der Heißwasserzubereitung in einer elektrischen Vorrichtung, insbesondere einer Getränkezubereitungsmaschine, wobei die Vorrichtung zur Regelung der Eingangsgröße eine elektronische Steuerungs- und Regelungseinrichtung zur Ansteuerung eines Stell- oder Korrekturmittels aufweist und einen elektronischen Speicher umfasst, in welchem ein Datensatz als Vergleichsmodell abgespeichert ist, der analytisch oder experimentell erstellt wurde, wobei aus der Gesamtheit der Daten durch die Regelelektronik eine Änderung der physikalischen Eingangsgröße anhand eines Modells bestimmt wird, **dadurch gekennzeichnet, dass** die Steuer- und Regelungseinrichtung mehrere verschiedenartige, analoge Regler aufweist, deren Kennlinien an den Datensatz des Vergleichsmodells angelehnt werden, wobei das Verfahren folgende Schritte umfasst:
1. Ermitteln der Eingangsgröße;
2. Vergleich von Ist-Soll-Werten durch Einordnen der Eingangsgröße in eine in dem Speicher abgelegten Eingangsgrößen-Systemtakt-Flächenmatrix;
3. Auswahl eines Reglertyps auf Basis der getroffenen Einordnung in der Matrix;
4. Ausgabe einer Steuergröße und eines Reglertyps auf Basis der getroffenen Einordnung zur Korrektur der Eingangsgröße;
5. Wiederholen der Schritte 1 bis 4.

10. Verfahren nach Anspruch 9, **dadurch gekennzeichnet, dass** die Ermittlung und Überprüfung der Eingangsgröße kontinuierlich erfolgt, so dass in Abhängigkeit von dem Systemtakt eine ständige Neubewertung über die Wahl eines der verschiedenartigen Analogregler der Steuerungs-und Regelungseinrichtung zur Verwendung der Parameter und zur Begrenzung des Wertebereichs der Analogregler durchgeführt wird.

11. Verfahren nach Anspruch 9 oder 10, **dadurch gekennzeichnet, dass** ein Systemtakt kleiner ist als die notwendige Einschwingzeit eines Analog-Reglers.

12. Verfahren nach Anspruch 10 oder 11, **dadurch gekennzeichnet, dass** es zur Temperaturregelung, insbesondere zur Heißwasserzubereitung in einer Getränkezubereitungsmaschine eingesetzt wird, wobei das Verfahren folgende Schritte umfasst:
1. Abfrage der in einer Temperatur-Zeit-Flächenmatrix definierten Solltemperatur, wobei bei erreichter Solltemperatur die Stellgröße zur Ansteuerung der elektrischen Energie beibehalten wird, oder wenn der Prozess zyklisch zur Erwärmung von Flüssigkeiten abgeschlossen ist, zum näch¬sten Prozessschritt übergegangen wird;
2. Bei Nichterreichen der Solltemperatur eine Auswahl eines der Analog-Regler in Abhängigkeit der Ortung der Temperatur innerhalb der Temperatur-Zeit-Flächenmatrix erfolgt, wobei die Matrix aus mindestens einem Zeitabschnitt und mindestens einem Temperaturschellenwert besteht;
3. Abfrage, wie der gewählte Analog-Regler in dem ermittelten Temperatur-Zeitfenster der Matrix anzusteuern ist,
4. Ausgabe der Stellgröße und des Reglertyps zur Korrektur der Solltemperatur,
5. Wiederholen die Schritte 1 bis 4,
wobei die Abfrage bei Unterschreiten oder Überschreiten eines Temperaturschwellwerts beliebig oft in Anhängigkeit von mehreren Temperaturschwellwerten solange durchgeführt wird, bis ein Temperaturbereich erreicht ist, innerhalb dessen der Analog-Regler ohne Eingrenzung des Regelbereichs angesteuert werden kann.
